# EUROPEAN PATENT APPLICATION

(11) **EP 4 848 506 A1**
(43) Date of publication of application: **02.12.2026**
(21) Application number: 26181384.4
(22) Date of filing: 27.05.2026
(51) Int. Cl.: H02B 13/00, H02B 1/21, H02B 1/34, H02B 1/56

(54) **SWITCHGEAR ASSEMBLY WITH ISOLATED CIRCUIT BREAKER SUPPORT**

(30) Priority: 28.05.2025 US 202563813136 P; 19.05.2026 US 202619681801
(71) Applicant: Vertiv Corporation, Westerville, OH 43082 (US)
(72) Inventor: KUMAR, Abhishekh, Westerville, 43082 (US); JETHVA, Kishan Jaysukh-Bhai, Westerville, 43082 (US)
(74) Representative: Bryn-Jacobsen, Caelia

(57) **Abstract**

A switchgear compartment assembly includes a housing delimiting an interior space and a support panel mounted within the interior space to subdivide the interior space into an upper compartment and a lower compartment. One or more circuit breaker assemblies are mounted atop the support panel within the upper compartment, and one or more busbars are disposed within the lower compartment. The support panel is configured to thermally and electrically isolate the one or more circuit breaker assemblies from the one or more busbars. The one or more circuit breaker assemblies are mounted spaced apart from a top and opposing sidewalls of the housing to facilitate airflow around the one or more circuit breaker assemblies for dissipating heat generated during operation.

## Description

### CROSS REFERENCE TO RELATED APPLICATION

This application claims the benefit of priority of U.S. Application Number 63/813,136 filed May 28, 2025 and titled ACB BREAKER BEARER THERMAL EFFICIENCY MANAGEMENT.

### TECHNICAL FIELD

The present disclosure relates generally to switchgear assemblies, and more particularly, to a switchgear compartment including a circuit breaker support panel, and a circuit breaker support panel assembly configured to mount in a switchgear compartment.

### BACKGROUND

Switchgear assemblies for data centers can include one or more vertical sections divided into compartments. Compartments can include, for example, device compartments containing circuit breakers and other electronic devices, bus compartments containing busbars, and cable compartments containing power cables.

Circuit breakers and other electronic devices are susceptible to damage and therefore must be thermally protected from excessive heat and electrically protected from electric arcs. As compartments transition from singular use compartments to multi-use compartments for space savings, there is a need to insulate components from other components within the same compartment. For example, in the case of a compartment containing both a circuit breaker assembly and at least one busbar, there is a need to thermally and electrically insulate the electronic components from the power supply components.

Therefore, what is needed is a physical separation solution for components housed in switchgear compartments.

### SUMMARY

According to one aspect, disclosed herein is a switchgear compartment assembly including a housing including a top, a bottom, and opposing sidewalls delimiting an interior space, a support panel mounted within the interior space transverse to the opposing sidewalls, the support panel subdividing the interior space into an upper compartment positioned above the support panel and a lower compartment positioned below the support panel, one or more circuit breaker assemblies mounted atop the support panel within the upper compartment, and one or more busbars disposed within the lower compartment, wherein the support panel is configured to thermally and electrically isolate the one or more circuit breaker assemblies from the one or more busbars, and wherein the one or more circuit breaker assemblies are mounted spaced apart from the top and the opposing sidewalls of the housing to facilitate airflow around the one or more circuit breaker assemblies for dissipating heat generated during operation.

In some examples, the support panel is configured to bear a weight of the one or more circuit breaker assemblies.

In some examples, the upper compartment has a greater volume than the lower compartment.

In some examples, a rear portion of the upper compartment is continuous with a rear portion of the lower compartment.

In some examples, the one or more busbars include one or more horizontal busbars electrically coupled to one or more vertical busbars.

In some examples, the one or more vertical busbars extend into the interior space from outside the housing.

In some examples, the assembly further includes one or more cables routed within the interior space between the upper compartment and the lower compartment.

In some examples, the support panel includes a plurality of air vents configured to facilitate airflow beneath the one or more circuit breaker assemblies.

In some examples, the support panel includes a plurality of fastener through holes configured to receive one or more fasteners for mounting the one or more circuit breaker assemblies to the support panel.

In some examples, at least one opposing sidewall of the opposing sidewalls includes one or more through passages configured for routing one or more cables.

According to another aspect, disclosed herein is a circuit breaker support assembly for mounting within a switchgear compartment, the assembly including a pair of opposing sidewalls configured to mount to a switchgear frame, a transverse bottom panel mounted to the pair of opposing sidewalls, and a transverse top panel mounted to the pair of opposing sidewalls above the transverse bottom panel, wherein the transverse top panel is configured to support one or more circuit breaker assemblies thereon, and wherein a lower compartment is delimited between the transverse bottom panel, the transverse top panel, and the pair of opposing sidewalls, the lower compartment configured to contain one or more busbars.

According to a further aspect, disclosed herein is a switchgear assembly including a frame, a plurality of vertical sections mounted to the frame, and a plurality of compartments arranged within the plurality of vertical sections, wherein at least one compartment of the plurality of compartments includes a support panel subdividing an interior space of the at least one compartment into an upper compartment and a lower compartment, one or more circuit breaker assemblies mounted within the upper compartment, and one or more busbars disposed within the lower compartment, wherein the support panel is configured to thermally and electrically isolate the one or more circuit breaker assemblies from the one or more busbars.

This summary is provided solely as an introduction to subject matter that is fully described in the following detailed description and drawing figures. This summary should not be considered to describe essential features nor be used to determine the scope of the claims. Moreover, it is to be understood that both the foregoing summary and the following detailed description are explanatory only and are not necessarily restrictive of the subject matter claimed.

### BRIEF DESCRIPTION OF THE DRAWINGS

Implementations of the present disclosure disclosed herein may be better understood when consideration is given to the following detailed description thereof. Such description refers to the included drawings, which are not necessarily to scale, and in which some features may be exaggerated, and some features may be omitted or may be represented schematically in the interest of clarity. Like reference numerals in the drawings may represent and refer to the same or similar element, feature, or function. In the drawings:
FIG. 1 is a front elevation view of a customizable switchgear assembly, in accordance with an of the present disclosure;
FIG. 2 is a front isometric view of a vertical section of a customizable switchgear assembly, in accordance with an example of the present disclosure;
FIG. 3 is a front elevation view of a switchgear compartment including a circuit breaker support panel, in accordance with an example of the present disclosure;
FIG. 4 is a fragmentary perspective view of the switchgear compartment, in accordance with an example of the present disclosure;
FIG. 5 is a top isometric view of a circuit breaker support assembly configured to mount in a switchgear compartment, in accordance with an example of the present disclosure; and
FIG. 6 is a bottom isometric view of the circuit breaker support assembly, in accordance with an example of the present disclosure.

### DETAILED DESCRIPTION

Before explaining one or more examples of the disclosure in detail, it is to be understood that the examples are not limited in their application to the details of construction and the arrangement of the components or steps or methodologies set forth in the following description or illustrated in the drawings. In the following detailed description of examples, numerous specific details may be set forth in order to provide a more thorough understanding of the disclosure. However, it will be apparent to one of ordinary skill in the art having the benefit of the instant disclosure that the examples disclosed herein may be practiced without some of these specific details. In other instances, well-known features may not be described in detail to avoid unnecessarily complicating the instant disclosure.

As used herein a letter following a reference numeral is intended to reference an example of the feature or element that may be similar, but not necessarily identical, to a previously described element or feature bearing the same reference numeral (e.g., 1, 1a, 1b). Such shorthand notations are used for purposes of convenience only and should not be construed to limit the disclosure in any way unless expressly stated to the contrary.

Further, unless expressly stated to the contrary, "or" refers to an inclusive or and not to an exclusive or. For example, a condition A or B is satisfied by any one of the following: A is true (or present), and B is false (or not present), A is false (or not present) and B is true (or present), and both A and B are true (or present).

In addition, the use of "a" or "an" may be employed to describe elements and components of examples disclosed herein. This is done merely for convenience and "a" and "an" are intended to include "one" or "at least one," and the singular also includes the plural unless it is obvious that it is meant otherwise.

Finally, as used herein any reference to "one example" or "examples" means that a particular element, feature, structure, or characteristic described in connection with the example is included in at least one example disclosed herein. The appearances of the phrase "in examples" in various places in the specification are not necessarily all referring to the same example, and examples may include one or more of the features expressly described or inherently present herein, or any combination or sub-combination of two or more such features, along with any other features which may not necessarily be expressly described or inherently present in the instant disclosure.

Examples of the present disclosure generally relate to switchgear assemblies and compartment architectures for supporting and thermally managing electrical power distribution equipment, such as circuit breaker assemblies and associated busbars. Modern electrical distribution systems increasingly demand compact, scalable, and high-current switchgear configurations capable of safely accommodating large electrical loads while maintaining reliability, serviceability, and thermal performance. In high-density switchgear environments, excessive heat generation from circuit breaker assemblies and busbars can negatively impact component lifespan, operational efficiency, and overall system reliability. Accordingly, disclosed examples provide compartmentalized switchgear arrangements configured to improve thermal isolation, airflow management, equipment accessibility, and structural support within switchgear assemblies.

In examples, a switchgear compartment assembly may include a support structure that subdivides an interior space into separate upper and lower compartments for independently supporting circuit breaker assemblies and busbars. The disclosed arrangements may facilitate airflow around the circuit breaker assemblies to improve heat dissipation while thermally and electrically isolating the circuit breaker assemblies from heat-generating busbars positioned below. In some examples, the compartment architecture may further improve equipment longevity, simplify cable routing, increase scalability of switchgear systems, and enable modular assembly configurations adaptable to a variety of power distribution applications. The disclosed support assemblies and compartment configurations may therefore provide improved thermal management, enhanced operational performance, improved maintenance accessibility, and increased flexibility for modern switchgear installations.

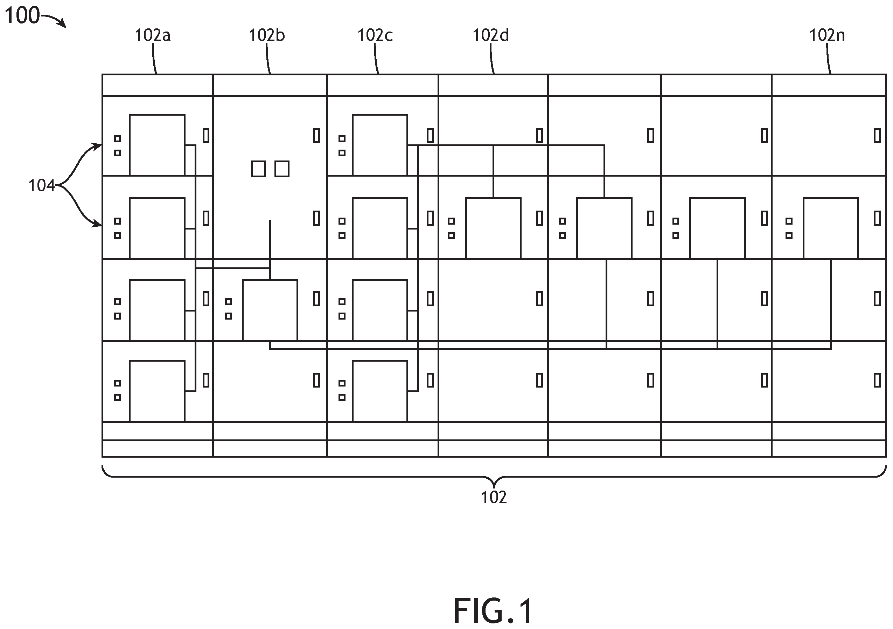

FIG. 1 illustrates a non-limiting example of a switchgear assembly 100 according to the present disclosure. In examples, the switchgear assembly 100 may include one or more vertical sections 102, for instance vertical sections 102a, 102b, 102c, 102d...102n arranged side-by-side to form a scalable electrical power distribution lineup. In examples, each vertical section 102 may be configured to house and support electrical distribution equipment associated with medium-voltage and/or low-voltage power distribution systems, including industrial, commercial, data center, and infrastructure applications. Each vertical section 102 may include a plurality of compartments 104 arranged vertically and/or horizontally depending upon the desired electrical architecture and equipment layout. The plurality of compartments 104 may include, but are not limited to, device compartments, circuit breaker compartments, busbar compartments, cable compartments, control compartments, relay compartments, metering compartments, and combinations thereof. In examples, one or more compartments 104 may be configured as dedicated compartments, whereas other compartments 104 may be configured as multi-use compartments adapted to contain multiple categories of electrical equipment.

In examples, the plurality of compartments 104 may be selectively isolated from one another to improve safety, arc fault containment, thermal management, and serviceability. In some examples, one or more compartments 104 may instead be partially or fully continuous with adjacent compartments 104 to permit extension of busbars, cabling, ventilation pathways, cooling structures, or other components throughout the switchgear assembly 100. For example, one or more horizontal busbars and/or vertical busbars may extend through multiple compartments 104 and/or multiple vertical sections 102 to distribute electrical power throughout the switchgear assembly 100. In examples, one or more compartments 104 may be accessible from front, rear, side, top, and/or bottom access locations depending upon the installation environment and desired maintenance access. In examples, one or more compartments 104 may further include removable covers, hinged doors, latched doors, interlocked access panels, sliding panels, or combinations thereof. In some examples, the switchgear assembly 100 may be configured as a modular assembly permitting additional vertical sections 102 and/or additional compartments 104 to be added, removed, rearranged, or customized without redesigning the entire switchgear assembly 100.

The compartments 104, also referred to herein as "cells," may be configured to contain particular categories of equipment according to the intended function of the respective compartment 104. For example, device compartments may contain one or more circuit breaker assemblies, contactors, disconnect switches, protective relays, control devices, monitoring devices, or other electrical devices. Busbar compartments may contain portions of one or more main busbars, feeder busbars, horizontal busbars, vertical busbars, neutral busbars, and/or grounding busbars. Cable compartments may contain one or more cables, cable terminations, lugs, connectors, cable supports, and cable routing structures. In examples, one or more compartments 104 may include environmental isolation structures, thermal barriers, electrical insulation structures, arc resistant structures, grounding structures, airflow management structures, or combinations thereof to improve operational safety and reliability. In examples, compartmentalization of the switchgear assembly 100 may reduce heat transfer between electrical components, improve fault isolation, and simplify maintenance and replacement procedures.

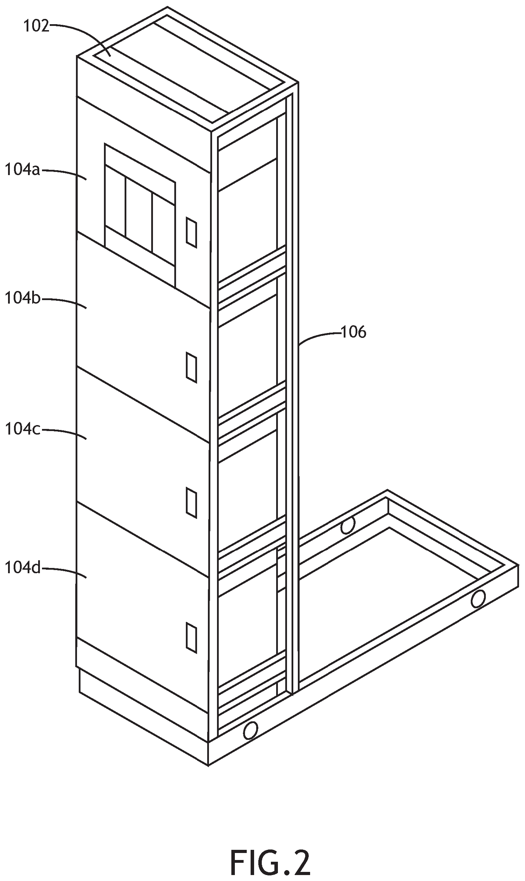

FIG. 2 illustrates a non-limiting example of a vertical section 102 including a plurality of compartments 104, for instance compartments 104a, 104b, 104c, and 104d arranged in a vertically stacked configuration. Each compartment 104 may be mounted to and supported by a frame 106 including vertical frame members, horizontal frame members, transverse support members, mounting brackets, reinforcement members, and/or other structural members. In examples, the frame 106 may define the primary structural support architecture of the vertical section 102 and may support the weight of the plurality of compartments 104, the one or more circuit breaker assemblies, the one or more busbars, cabling, and associated electrical equipment. In examples, the frame 106 may be formed from metal materials including steel, stainless steel, aluminum, galvanized steel, or combinations thereof. In some examples, the plurality of compartments 104 may be independently formed modules configured to be removably mounted to the frame 106. In other examples, two or more compartments 104 may be integrally formed together to define modular compartment assemblies. In examples, the frame 106 may be customizable and scalable to accommodate varying numbers, sizes, and configurations of vertical sections 102 and compartments 104 depending upon the desired current ratings, voltage ratings, equipment configurations, and installation constraints.

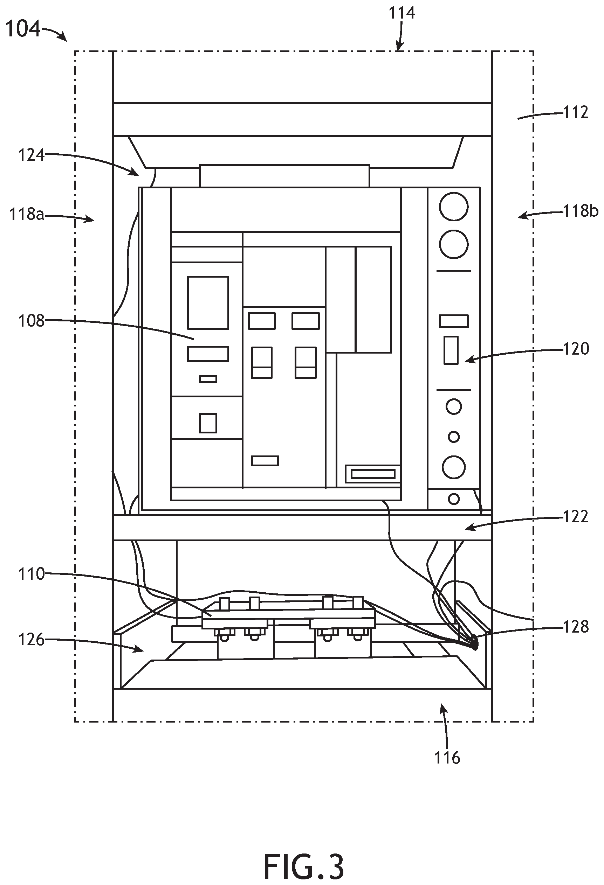

FIG. 3 illustrates a compartment 104 implemented as a switchgear compartment according to the present disclosure. In examples, the compartment 104 implemented as a switchgear compartment may be configured as a multi-use compartment adapted to contain one or more circuit breaker assemblies 108 and one or more busbars 110 within a common housing 112 while maintaining thermal and electrical isolation therebetween. In examples, the one or more circuit breaker assemblies 108 may comprise air circuit breakers (ACBs) or other types of circuit breakers. In some examples, the one or more circuit breaker assemblies 108 may include relatively high-current devices, for example devices rated between approximately 800A and approximately 1250A, although other current ratings may be utilized. In examples, the housing 112 includes a top 114, a bottom 116, and opposing sidewalls 118a, 118b delimiting an interior space 120. In some examples, portions of the housing 112 may be partially or entirely formed by the frame 106 (see FIG. 2). In examples, the housing 112 may further include front panels, rear panels, removable covers, doors, ventilation structures, mounting flanges, grounding features, or reinforcement structures.

In examples, the compartment 104 implemented as a switchgear compartment further includes a support panel 122 mounted transverse within the interior space 120 to subdivide the interior space 120 into an upper compartment 124 positioned above the support panel 122 and a lower compartment 126 positioned below the support panel 122. In examples, the support panel 122 may extend substantially horizontally across the interior space 120 and may function as both a structural support member and a thermal and electrical isolation barrier. In examples, the support panel 122 may support the weight of the one or more circuit breaker assemblies 108 mounted within the upper compartment 124 while isolating the one or more circuit breaker assemblies 108 from the one or more busbars 110 positioned within the lower compartment 126. In examples, the upper compartment 124 and the lower compartment 126 may be fully isolated from one another in one or more regions and partially continuous with one another in one or more other regions. For example, front portions of the upper compartment 124 and the lower compartment 126 may be separated by the support panel 122 whereas rear portions of the upper compartment 124 and the lower compartment 126 may remain open or continuous to facilitate cable routing, airflow, busbar routing, maintenance access, and/or equipment interconnection.

In examples, the upper compartment 124 may be dimensioned larger than the lower compartment 126 to accommodate the size, airflow requirements, and maintenance access requirements associated with the one or more circuit breaker assemblies 108. For example, the upper compartment 124 and the lower compartment 126 may have substantially equal depths while the upper compartment 124 may have a height at least approximately double a height of the lower compartment 126. In examples, the support panel 122 may position the one or more circuit breaker assemblies 108 substantially centered within the upper compartment 124 and spaced apart from the top 114 and opposing sidewalls 118a, 118b of the housing 112. Such spacing may facilitate airflow above, below, beside, behind, and around the one or more circuit breaker assemblies 108 to improve heat dissipation and reduce localized heat accumulation within the compartment 104.

In examples, the one or more busbars 110 positioned within the lower compartment 126 may include one or more horizontal busbars electrically coupled to one or more vertical busbars. In examples, the one or more horizontal busbars may distribute electrical power to the one or more circuit breaker assemblies 108 positioned within the upper compartment 124, whereas the one or more vertical busbars may function as supply busbars extending into the interior space 120 from external portions of the switchgear assembly 100. In examples, the lower compartment 126 may isolate heat generated by the one or more busbars 110 away from the one or more circuit breaker assemblies 108. In examples, one or more cables 128 may extend between the upper compartment 124 and the lower compartment 126 through one or more openings, passages, or routing regions. In examples, the routing of the one or more cables 128 through the compartment 104 may simplify electrical interconnection while maintaining compartmentalization and airflow management.

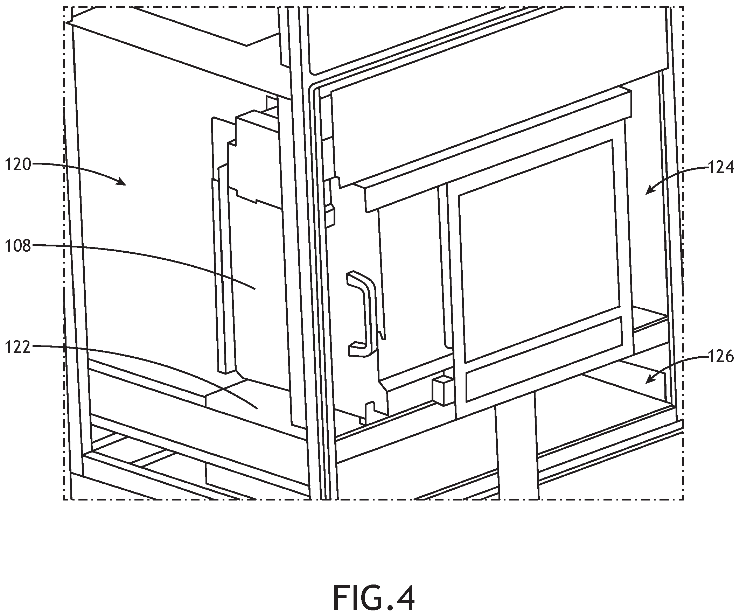

FIG. 4 illustrates the general mounting disposition of the one or more circuit breaker assemblies 108 within the upper compartment 124 and relative to the support panel 122. In examples, the support panel 122 may thermally and electrically isolate the one or more circuit breaker assemblies 108 from the one or more busbars 110 (see FIG. 3) positioned within the lower compartment 126. In examples, the support panel 122 may reduce direct heat transfer from the one or more busbars 110 to the one or more circuit breaker assemblies 108 to improve thermal performance, operational efficiency, reliability, and lifespan of the one or more circuit breaker assemblies 108. In examples, the support panel 122 may further reduce contamination, debris migration, electrical interference, and fault propagation between the upper compartment 124 and the lower compartment 126.

In examples, the one or more circuit breaker assemblies 108 may be mounted atop the support panel 122 in a substantially centered arrangement relative to the interior space 120. In examples, airflow pathways may be formed above, below, beside, and behind the one or more circuit breaker assemblies 108 to facilitate natural convection airflow and/or forced airflow through the upper compartment 124. In some examples, cooling fans, ducts, vents, louvers, or additional airflow management structures may be included to further increase heat dissipation. In examples, the disclosed arrangement may improve thermal management of relatively high-current circuit breaker assemblies while maintaining compact compartment dimensions within the switchgear assembly 100.

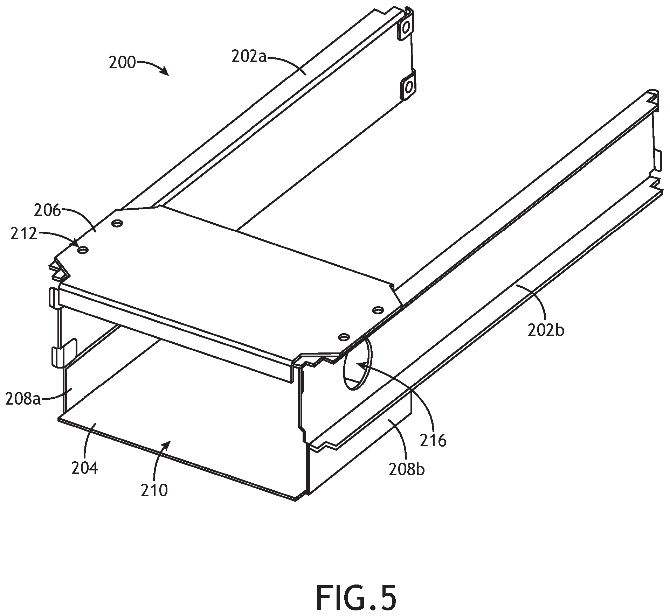

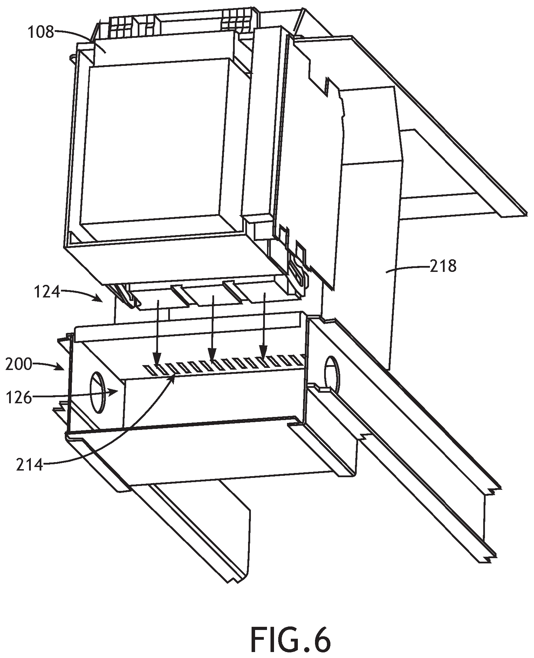

FIGS. 5 and 6 illustrate a support panel assembly implemented as a circuit breaker support assembly 200 configured to mount within a compartment 104, for instance a switchgear compartment. In examples, the circuit breaker support assembly 200 includes a pair of opposing sidewalls 202a, 202b configured to mount to the frame 106 (see FIG. 2), a transverse bottom panel 204 mounted to the pair of opposing sidewalls 202a, 202b, and a transverse top panel 206 mounted spaced above the transverse bottom panel 204. In examples, the transverse top panel 206 may define the support panel 122 described above. In examples, the transverse bottom panel 204 and the transverse top panel 206 may cooperate with the pair of opposing sidewalls 202a, 202b to define a structural support enclosure configured to support the one or more circuit breaker assemblies 108 and contain the one or more busbars 110.

In some examples, the transverse bottom panel 204 may be coupled to the pair of opposing sidewalls 202a, 202b through a further pair of opposing sidewalls 208a, 208b extending between the transverse bottom panel 204 and the transverse top panel 206. In examples, the further pair of opposing sidewalls 208a, 208b may provide additional structural rigidity, compartment isolation, and support for the lower compartment 210. In examples, the lower compartment 210 may correspond to the lower compartment 126 described above and may be configured to contain one or more busbars 110, cable routing structures, grounding structures, or associated electrical components.

In examples, each of the pair of opposing sidewalls 202a, 202b, the transverse bottom panel 204, the transverse top panel 206, and the further pair of opposing sidewalls 208a, 208b may be formed from stamped metal including stamped steel. In other examples, the various panels and sidewalls may be welded, bolted, riveted, bent, integrally formed, modularly assembled, or otherwise interconnected. In examples, the transverse top panel 206 may include a plurality of fastener through holes 212 configured to receive one or more fasteners, such as bolts or screws, for mounting the one or more circuit breaker assemblies 108 thereto. In examples, the transverse top panel 206 may further include a plurality of air vents 214 (see FIG. 6), configured to facilitate airflow beneath the one or more circuit breaker assemblies 108 to dissipate heat generated during operation.

In examples, one or more through passages 216 may extend through one or both of the pair of opposing sidewalls 202a, 202b to facilitate routing of one or more cables, conductors, control wires, communication lines, grounding conductors, or other electrical interconnections. In examples, the one or more through passages 216 may include grommets, insulating liners, bushings, edge protection structures, or sealing structures. In examples, the depth of the transverse top panel 206 may be less than a length of the pair of opposing sidewalls 202a, 202b such that open airflow regions and/or cable routing regions are defined within the compartment 104.

FIG. 6 illustrates the circuit breaker support assembly 200 showing the mounting disposition of the one or more circuit breaker assemblies 108 relative to the plurality of air vents 214. In examples, the plurality of air vents 214 may facilitate airflow through and beneath the one or more circuit breaker assemblies 108 to reduce heat accumulation within the upper compartment 124. In examples, the resulting airflow management may improve operational efficiency, reduce thermal stress, increase equipment lifespan, and improve reliability of the one or more circuit breaker assemblies 108 and associated electrical components. In some examples, one or more vertical panels 218 may extend along rear portions of the upper compartment 124 and/or the lower compartment 126 to partially or fully close rear regions of the compartment 104 while still permitting desired airflow and cable routing pathways.

The herein described subject matter sometimes illustrates different components contained within, or connected with, different other components. It is to be understood that such depicted architectures are merely exemplary, and that in fact many other architectures can be implemented which achieve the same functionality. In a conceptual sense, any arrangement of components to achieve the same functionality is effectively "associated" such that the desired functionality is achieved. Hence, any two components herein combined to achieve a particular functionality can be seen as "associated with" each other such that the desired functionality is achieved, irrespective of architectures or intermedial components. Likewise, any two components so associated can also be viewed as being "operably connected", or "operably coupled", to each other to achieve the desired functionality, and any two components capable of being so associated can also be viewed as being "operably couplable", to each other to achieve the desired functionality. Specific examples of operably couplable include but are not limited to physical mateability and/or physically interacting components.
Further examples are set out in the clauses below:
1. A switchgear compartment assembly, comprising:
   a housing including a top, a bottom, and opposing sidewalls delimiting an interior space; a support panel mounted within the interior space transverse to the opposing sidewalls, the support panel subdividing the interior space into an upper compartment positioned above the support panel and a lower compartment positioned below the support panel;
   one or more circuit breaker assemblies mounted atop the support panel within the upper compartment; and
   one or more busbars disposed within the lower compartment,
   wherein the support panel is configured to thermally and electrically isolate the one or more circuit breaker assemblies from the one or more busbars, and
   wherein the one or more circuit breaker assemblies are mounted spaced apart from the top and the opposing sidewalls of the housing to facilitate airflow around the one or more circuit breaker assemblies for dissipating heat generated during operation.
2. The switchgear compartment assembly of clause 1, wherein the support panel is configured to bear a weight of the one or more circuit breaker assemblies.
3. The switchgear compartment assembly of any one of the preceding clauses, wherein the upper compartment has a greater volume than the lower compartment.
4. The switchgear compartment assembly of any one of the preceding clauses, wherein a rear portion of the upper compartment is continuous with a rear portion of the lower compartment.
5. The switchgear compartment assembly of any one of the preceding clauses, wherein the one or more busbars include one or more horizontal busbars electrically coupled to one or more vertical busbars.
6. The switchgear compartment assembly of clause 5, wherein the one or more vertical busbars extend into the interior space from outside the housing.
7. The switchgear compartment assembly of any one of the preceding clauses, further comprising one or more cables routed within the interior space between the upper compartment and the lower compartment.
8. The switchgear compartment assembly of any one of the preceding clauses, wherein the support panel includes a plurality of air vents configured to facilitate airflow beneath the one or more circuit breaker assemblies.
9. The switchgear compartment assembly of any one of the preceding clauses, wherein the support panel includes a plurality of fastener through holes configured to receive one or more fasteners for mounting the one or more circuit breaker assemblies to the support panel.
10. The switchgear compartment assembly of any one of the preceding clauses, wherein at least one opposing sidewall of the opposing sidewalls includes one or more through passages configured for routing one or more cables.
11. A circuit breaker support assembly for mounting within a switchgear compartment, comprising:
   a pair of opposing sidewalls configured to mount to a switchgear frame;
   a transverse bottom panel mounted to the pair of opposing sidewalls; and
   a transverse top panel mounted to the pair of opposing sidewalls above the transverse bottom panel,
   wherein the transverse top panel is configured to support one or more circuit breaker assemblies thereon, and
   wherein a lower compartment is delimited between the transverse bottom panel, the transverse top panel, and the pair of opposing sidewalls, the lower compartment configured to contain one or more busbars.
12. The circuit breaker support assembly of clause 11, further comprising a further pair of opposing sidewalls extending between the transverse bottom panel and the transverse top panel.
13. The circuit breaker support assembly of clause 11 or 12, wherein the transverse top panel includes a plurality of air vents configured to dissipate heat generated by the one or more circuit breaker assemblies supported on the transverse top panel.
14. The circuit breaker support assembly of any one of clauses 11-13, wherein the transverse top panel includes a plurality of fastener through holes configured to receive one or more fasteners for mounting the one or more circuit breaker assemblies to the transverse top panel.
15. The circuit breaker support assembly of any one of clauses 11-14, wherein each opposing sidewall of the pair of opposing sidewalls includes one or more through passages configured for routing one or more cables.
16. The circuit breaker support assembly of any one of clauses 11-15, wherein the transverse top panel has a depth less than a length of each opposing sidewall of the pair of opposing sidewalls.
17. A switchgear assembly, comprising:
   a frame;
   a plurality of vertical sections mounted to the frame; and
   a plurality of compartments arranged within the plurality of vertical sections,
   wherein at least one compartment of the plurality of compartments includes:
      a support panel subdividing an interior space of the at least one compartment into an upper compartment and a lower compartment;
      one or more circuit breaker assemblies mounted within the upper compartment; and
      one or more busbars disposed within the lower compartment,
      wherein the support panel is configured to thermally and electrically isolate the one or more circuit breaker assemblies from the one or more busbars.
18. The switchgear assembly of clause 17, wherein at least one busbar of the one or more busbars extends between two or more compartments of the plurality of compartments.
19. The switchgear assembly of clause 17 or 18, wherein the one or more circuit breaker assemblies are mounted substantially centered within the upper compartment to facilitate airflow around the one or more circuit breaker assemblies.
20. The switchgear assembly of any one of clauses 17-19, wherein the support panel is configured to reduce heat exposure from the one or more busbars positioned within the lower compartment to improve an operational lifespan of the one or more circuit breaker assemblies positioned within the upper compartment.

While particular aspects of the present subject matter described herein have been shown and described, it will be apparent to those skilled in the art that, based upon the teachings herein, changes and modifications may be made without departing from the subject matter described herein and its broader aspects and, therefore, the appended claims are to encompass within their scope all such changes and modifications as are within the e scope of the subject matter described herein. Furthermore, it is to be understood that the invention is defined by the appended claims.

## Claims

1. A switchgear compartment assembly, comprising:
a housing including a top, a bottom, and opposing sidewalls delimiting an interior space;
a support panel mounted within the interior space transverse to the opposing sidewalls, the support panel subdividing the interior space into an upper compartment positioned above the support panel and a lower compartment positioned below the support panel;
one or more circuit breaker assemblies mounted atop the support panel within the upper compartment; and
one or more busbars disposed within the lower compartment,
wherein the support panel is configured to thermally and electrically isolate the one or more circuit breaker assemblies from the one or more busbars, and
wherein the one or more circuit breaker assemblies are mounted spaced apart from the top and the opposing sidewalls of the housing to facilitate airflow around the one or more circuit breaker assemblies for dissipating heat generated during operation.

2. The switchgear compartment assembly of claim 1, wherein the support panel is configured to bear a weight of the one or more circuit breaker assemblies.

3. The switchgear compartment assembly of claim 1, wherein the upper compartment has a greater volume than the lower compartment.

4. The switchgear compartment assembly of claim 1, wherein a rear portion of the upper compartment is continuous with a rear portion of the lower compartment.

5. The switchgear compartment assembly of claim 1, wherein the one or more busbars include one or more horizontal busbars electrically coupled to one or more vertical busbars.

6. The switchgear compartment assembly of claim 5, wherein the one or more vertical busbars extend into the interior space from outside the housing.

7. The switchgear compartment assembly of claim 1, further comprising one or more cables routed within the interior space between the upper compartment and the lower compartment.

8. The switchgear compartment assembly of claim 1, wherein the support panel includes a plurality of air vents configured to facilitate airflow beneath the one or more circuit breaker assemblies.

9. The switchgear compartment assembly of claim 1, wherein the support panel includes a plurality of fastener through holes configured to receive one or more fasteners for mounting the one or more circuit breaker assemblies to the support panel.

10. The switchgear compartment assembly of claim 1, wherein at least one opposing sidewall of the opposing sidewalls includes one or more through passages configured for routing one or more cables.

11. A circuit breaker support assembly for mounting within a switchgear compartment, comprising:
a pair of opposing sidewalls configured to mount to a switchgear frame;
a transverse bottom panel mounted to the pair of opposing sidewalls; and
a transverse top panel mounted to the pair of opposing sidewalls above the transverse bottom panel,
wherein the transverse top panel is configured to support one or more circuit breaker assemblies thereon, and
wherein a lower compartment is delimited between the transverse bottom panel, the transverse top panel, and the pair of opposing sidewalls, the lower compartment configured to contain one or more busbars.

12. The circuit breaker support assembly of claim 11, further comprising a further pair of opposing sidewalls extending between the transverse bottom panel and the transverse top panel.

13. The circuit breaker support assembly of claim 11, wherein the transverse top panel includes a plurality of air vents configured to dissipate heat generated by the one or more circuit breaker assemblies supported on the transverse top panel; or optionally
wherein the transverse top panel includes a plurality of fastener through holes configured to receive one or more fasteners for mounting the one or more circuit breaker assemblies to the transverse top panel; or optionally
wherein each opposing sidewall of the pair of opposing sidewalls includes one or more through passages configured for routing one or more cables; or optionally
wherein the transverse top panel has a depth less than a length of each opposing sidewall of the pair of opposing sidewalls.

14. A switchgear assembly, comprising:
a frame;
a plurality of vertical sections mounted to the frame; and
a plurality of compartments arranged within the plurality of vertical sections,
wherein at least one compartment of the plurality of compartments includes:
a support panel subdividing an interior space of the at least one compartment into an upper compartment and a lower compartment;
one or more circuit breaker assemblies mounted within the upper compartment; and
one or more busbars disposed within the lower compartment,
wherein the support panel is configured to thermally and electrically isolate the one or more circuit breaker assemblies from the one or more busbars.

15. The switchgear assembly of claim 14, wherein at least one busbar of the one or more busbars extends between two or more compartments of the plurality of compartments; or optionally
wherein the one or more circuit breaker assemblies are mounted substantially centered within the upper compartment to facilitate airflow around the one or more circuit breaker assemblies; or optionally
wherein the support panel is configured to reduce heat exposure from the one or more busbars positioned within the lower compartment to improve an operational lifespan of the one or more circuit breaker assemblies positioned within the upper compartment.
